# EUROPÄISCHE PATENTSCHRIFT

(11) **EP 2 795 991 B1**
(45) Veröffentlichungstag und Bekanntmachung des Hinweises auf die Patenterteilung: **28.06.2017**
(21) Anmeldenummer: 12810094.8
(22) Anmeldetag: 17.12.2012
(51) Int. Cl.: H04L 29/06, H04W 4/00, G06K 7/00, H04B 5/00

(54) **VERFAHREN ZUR KOMMUNIKATION MIT EINEM TRAGBAREN DATENTRÄGER**
METHOD FOR COMMUNICATING WITH A PORTABLE DATA CARRIER
PROCÉDÉ DE COMMUNICATION AVEC UN SUPPORT DE DONNÉES PORTABLE

(30) Priorität: 19.12.2011 DE 102011121661
(43) Veröffentlichungstag der Anmeldung: 29.10.2014
(73) Patentinhaber: Giesecke & Devrient GmbH, 81677 München (DE)
(72) Erfinder: FINKENZELLER, Klaus, 85774 Unterföhring (DE); SCHMIDTKE, Rainer, 82008 Unterhaching (DE)
(86) Internationale Anmeldenummer: PCT/EP2012/005207
(87) Internationale Veröffentlichungsnummer: WO 2013/091818

(56) Entgegenhaltungen:
- EP-A2- 2 018 023
- WO-A1-2011/112158
- "Tethering", Wikipedia , 6. Dezember 2011 (2011-12-06), XP002696876, Gefunden im Internet: URL:http://en.wikipedia.org/w/index.php?ti tle=Tethering&oldid=464395712 [gefunden am 2013-05-13]

## Beschreibung

Die Erfindung betrifft eine Vorrichtung zur Kommunikation mit einem tragbaren Datenträger sowie ein Verfahren zur Kommunikation zwischen einer Vorrichtung und einem tragbaren Datenträger.

Es ist bekannt, eine kontaktlose Kommunikation zwischen einem Lesegerät und einem tragbaren Datenträger, wie z.B. einer Chipkarte, Smartcard etc., durchzuführen. Beispielsweise werden zur kontaktlosen Kommunikation RFID-Systeme (Radio Frequency Identification) eingesetzt, um eine Kommunikation zwischen dem Lesegerät und dem tragbaren Datenträger über ein magnetisches Wechselfeld des Lesegeräts durchzuführen. In RFID-Systemen besitzt das Lesegerät eine Antennenspule zur Erzeugung des magnetischen Wechselfelds. Der tragbare Datenträger umfasst ebenfalls eine Antennenspule, um dem magnetischen Wechselfeld die benötigte Energie zu entnehmen. Eine Kombination der Antennenspule mit einer Schaltung des tragbaren Datenträgers wird als Transponder bezeichnet. Über das magnetische Wechselfeld werden auch Daten zwischen dem Transponder und dem Lesegerät übertragen.

Es ist des Weiteren bekannt, einen tragbaren Datenträger mit einer optischen Schnittstelle, nämlich einer Infrarotschnittstelle, auszustatten, welche als Sendevorrichtung, als Empfangsvorrichtung oder als umschaltbare Sende-/Empfangsvorrichtung ausgebildet sein kann und einen alternativen Datenübertragungskanal bildet. Um die Infrarotschnittstelle des tragbaren Datenträgers zum Senden von Daten an ein Lesegerät einzusetzen, muss die Infrarotschnittstelle mit ausreichend Energie versorgt werden. Hierzu wurde vorgeschlagen, die herkömmliche Antennenspule zu nutzen, um die Infrarotschnittstelle über das magnetische Wechselfeld des Lesegeräts mit ausreichend Energie zu versorgen. Hierbei erfolgt die Daten- und Energieübertragung über zwei unterschiedliche, kontaktlose Schnittstellen. Die zusätzliche Infrarotschnittstelle bildet einen zusätzlichen Datenübertragungskanal, welcher als Sendevorrichtung, als Empfangsvorrichtung oder als umschaltbare Sende-/Empfangsvorrichtung ausgebildet sein kann.

Bei der Verwendung tragbarer Datenträger, welche über zwei unterschiedliche, kontaktlose Schnittstellen verfügen, besteht für Kommunikationsvorrichtungen das Problem, dass neben einer Schnittstelle zu einem kontaktlos arbeitenden Lesegerät eine zusätzliche Schnittstelle für die Verarbeitung optischer Signale vorgesehen sein muss. Dies führt insbesondere bei den auf den Vorrichtungen implementierten Softwareanwendungen zu Problemen, wobei in der Regel eine Überarbeitung einer vorhandenen Anwendungssoftware erforderlich ist.

Es wird somit eine Lösung benötigt, wie ein Lesegerät, welches ursprünglich nur zur kontaktlosen Kommunikation mit einem tragbaren Datenträger über eine einzige kontaktlose Schnittstelle eingerichtet ist, in einfacher Weise derart nachgerüstet werden kann, dass eine Datenkommunikation zwischen dem Lesegerät und dem Datenträger auch über eine andere kontaktlose Schnittstelle erfolgen kann. Hierzu schlägt die DE 10 2005 053 210 B3 vor, Infrarot-Signale mittels eines entsprechend ausgestalteten Transponders in kontaktlose Kommunikationssignale umzuwandeln. Nachteilig an dieser Lösung ist der Umstand, dass zusätzlich zu dem Lesegerät ein weiterer Transponder für die Datenwandlung benötigt wird.

Die Veröffentlichungsschrift EP2018023 A2 offenbart die Präambel des unabhängigen Anspruchs 1.

Die Internetveröffentlichung "Tethering" (XP00269687) lehrt die Verbindung eines Internet-fähigen mobilen Endgeräts mit einem anderen Endgerät, um letzterem den Internetzugang zu ermöglichen.

Es ist Aufgabe der vorliegenden Erfindung, eine Lösung anzugeben, auf welche Weise eine ursprünglich nur zur kontaktlosen Kommunikation mit einem tragbaren Datenträger über eine einzige kontaktlose Schnittstelle eingerichtete Vorrichtung so weitergebildet werden kann, dass zusätzliche Komponenten, wie ein Transponder, vermieden werden können. Eine weitere Aufgabe der Erfindung besteht in der Angabe eines entsprechenden Verfahrens zur Kommunikation zwischen einer solchen Vorrichtung und einem tragbaren Datenträger.

Diese Aufgaben werden gelöst durch eine Vorrichtung gemäß den Merkmalen des Patentanspruchs 1 und ein Verfahren gemäß den Merkmalen des Patentanspruchs 8. Vorteilhafte Ausgestaltungen ergeben sich aus den abhängigen Patentansprüchen.

Die Erfindung schafft eine Vorrichtung zur Kommunikation mit einem tragbaren Datenträger. Die Vorrichtung umfasst eine erste, auf drahtloser Datenübertragungstechnik basierende Kommunikationsschnittstelle zum Empfangen und/ oder Senden von Daten über einen ersten Kommunikationskanal. Ferner umfasst die Vorrichtung eine zweite, auf dazu unterschiedlicher kontaktloser Datenübertragungstechnik basierende Kommunikationsschnittstelle zum Empfangen und/oder Senden von Daten über einen zweiten Kommunikationskanal. Während die erste Kommunikationsschnittstelle der Vorrichtung ein Lesegerät zur Erzeugung eines magnetischen Wechselfelds umfassen kann, basiert die zweite Kommunikationsschnittstelle beispielsweise auf einer optischen Schnittstelle, beispielsweise einer Infrarotschnittstelle. Die Kommunikationsschnittstellen können integraler Bestandteil der Vorrichtung, aber auch über entsprechende Schnittstellen mit einer separaten Vorrichtung, beispielsweise einem Rechner, verbunden sein. Die Kommunikationsschnittstellen können dann beispielsweise über eine kabelgebundene Schnittstelle, wie z.B. USB, an die Vorrichtung angeschlossen sein.

Die Vorrichtung umfasst weiter eine erste Software-Schnittstelle zu der ersten Kommunikationsschnittstelle, über die ein in der Vorrichtung gespeichertes Anwendungsprogramm mit der ersten Kommunikationsschnittstelle kommunizieren kann. Bei der ersten Software-Schnittstelle handelt es sich beispielsweise um ein Rechner-Smartcard-Interface, es kann jedoch auch jedes andere, standardisierte Interface als Software-Schnittstelle zum Einsatz kommen. Die Aufgabe der ersten Software-Schnittstelle besteht darin, von dem Anwendungsprogramm erhaltene Daten, insbesondere Applikationsdaten und/ oder Steuersequenzen, in Kommandos der ersten Kommunikationsschnittstelle zu übersetzen, und umgekehrt.

Weiterhin umfasst die Vorrichtung eine zweite Software-Schnittstelle, über die das Anwendungsprogramm mit der zweiten Kommunikationsschnittstelle kommunizieren kann, wobei die Kommunikation von der ersten Software-Schnittstelle zu der ersten Kommunikationsschnittstelle, und umgekehrt, über die zweite Softwareschnittstelle geleitet wird.

Durch die zweite Software-Schnittstelle ist es möglich, die an der zweiten Kommunikationsschnittstelle empfangenen Daten dem Anwendungsprogramm zur Verfügung zu stellen. Wird dabei die Kommunikation auch von der ersten Software-Schnittstelle zu der ersten Kommunikationsschnittstelle über die zweite Software-Schnittstelle geleitet, so kann der zusätzliche, zweite Kommunikationskanal zwischen dem tragbaren Datenträger und der Vorrichtung ohne die Änderung der vorhandenen Anwendungssoftware in die Vorrichtung eingebunden werden. Es ist lediglich das zusätzliche Vorsehen der zweiten Software-Schnittstelle erforderlich, durch welche auch die Kommunikation von der ersten Software-Schnittstelle zu der ersten Kommunikationsschnittstelle geleitet wird.

Durch den zusätzlichen zweiten Kommunikationskanal zwischen dem tragbaren Datenträger und dem Anwendungsprogramm kann auf einfache Weise die Sicherheit einer kontaktlosen Kommunikation zwischen der Vorrichtung und dem Datenträger erhöht werden. Dies kann beispielsweise dadurch erreicht werden, dass durch ein Kommando eine von der Vorrichtung angeforderte Zufallszahl über den zusätzlichen, zweiten Kommunikationskanal gesendet wird, während über den ersten Kommunikationskanal keine oder ungültige Daten übertragen werden.

Zweckmäßigerweise wird die gesamte Kommunikation von der ersten Software-Schnittstelle zu der ersten Kommunikationsschnittstelle über die zweite Software-Schnittstelle geleitet. Ebenso ist es zweckmäßig, wenn an der zweiten Kommunikationsschnittstelle empfangene Daten über die zweite Software-Schnittstelle an das Anwendungsprogramm übertragen werden. Die zweite Software-Schnittstelle leitet Daten, die zwischen dem Anwendungsprogramm und der ersten Kommunikationsschnittstelle ausgetauscht werden, bidirektional an den jeweiligen Empfänger weiter.

Es ist weiterhin zweckmäßig, wenn die erste Software-Schnittstelle dazu ausgebildet ist, von dem Anwendungsprogramm erhaltene Daten, insbesondere Applikationsdaten und/oder Steuersequenzen, in Kommandos der ersten Kommunikationsschnittstelle zu übersetzen, und umgekehrt. Die Funktionalität der ersten Software-Schnittstelle unterscheidet sich damit nicht von solchen Software-Schnittstellen wie diese in herkömmlichen Vorrichtungen zur Kommunikation mit einem tragbaren Datenträger über ein Lesegerät zur Erzeugung eines magnetischen Wechselfelds eingesetzt werden. Die erste Software-Schnittstelle kann ein standardisiertes Interface, z.B. ein PC/SC-, TCP/IP- oder RS232-Interface sein. Die erste Software-Schnittstelle kann insbesondere dazu ausgebildet sein, ganze Kommandosequenzen abzuarbeiten, wie diese beispielsweise beim Aufbau einer Kommunikationsbeziehung zu einem tragbaren Datenträger häufig verwendet werden.

Es ist weiterhin zweckmäßig, wenn die zweite Software-Schnittstelle dazu ausgebildet ist, die zwischen der ersten Software-Schnittstelle und der ersten Kommunikationsschnittstelle übertragenen Daten zu analysieren und zu interpretieren. Es ist weiterhin zweckmäßig, wenn die zweite Software-Schnittstelle dazu ausgebildet ist, in Abhängigkeit des Ergebnisses einer Analyse der von der ersten Kommunikationsschnittstelle übertragenen Daten, selektiv die an der ersten oder an der zweiten Kommunikationsschnittstelle empfangenen Daten zu verarbeiten und an das Anwendungsprogramm zu übertragen. Beispielsweise können die an der nichtrelevanten Kommunikationsschnittstelle empfangenen Daten verworfen werden. Wird beispielsweise von der Vorrichtung an den tragbaren Datenträger ein Kommando gesendet, auf welches eine Antwort über die zweite Kommunikationsschnittstelle erwartet wird, so kann vorgesehen sein, dass anstelle der Antwort der ersten Kommunikationsschnittstelle, die über die zweite Kommunikationsschnittstelle empfangenen Daten an das Anwendungsprogramm geleitet werden. Die von der ersten Kommunikationsschnittstelle empfangenen Anwendungsdaten können hingegen verworfen werden, da diese Daten keine gültigen Daten enthalten.

Es ist weiterhin zweckmäßig, wenn die zweite Software-Schnittstelle dazu ausgebildet ist, von der ersten Software-Schnittstelle empfangene Daten, insbesondere Kommandos für die erste Kommunikationsschnittstelle, anzupassen und/ oder zu verändern, um eine Kommunikation über die zweite Kommunikationsschnittstelle zu aktivieren. Hierdurch kann durch die zweite Software-Schnittstelle, beispielsweise zur Absicherung der Kommunikation der Vorrichtung mit dem tragbaren Datenträger, eine an sich an der ersten Kommunikationsschnittstelle erwartete Antwort an die zweite Kommunikationsschnittstelle "umgeleitet" werden. Die Umleitung erfolgt dabei derart, dass in einem an den Datenträger übertragenen Kommando der Datenträger dazu veranlasst wird, das Ergebnis der Bearbeitung über eine zur zweiten Kommunikationsschnittstelle korrespondierende Schnittstelle auszusenden.

Der Vorteil der erfindungsgemäßen Vorrichtung besteht darin, dass weder die Hardware der Vorrichtung, noch Datenträger mit zwei unterschiedlichen kontaktlosen Schnittstellen modifiziert werden brauchen. Es ist lediglich das Vorsehen der zusätzlichen zweiten Software-Schnittstelle in der Vorrichtung notwendig, welche die Kommunikation zwischen einer auf der Vorrichtung laufenden Anwendungssoftware und den beiden Kommunikationsschnittstellen der Vorrichtung überwacht bzw. organisiert.

Die Erfindung schafft weiter ein Verfahren zur Kommunikation zwischen einer Vorrichtung und einem tragbaren Datenträger, wobei die Vorrichtung eine erste, auf drahtloser Datenübertragungstechnik basierende Kommunikationsschnittstelle zum Empfangen und/oder Senden von Daten über einen ersten Kommunikationskanal und eine zweite, auf dazu unterschiedlicher kontaktloser Datenübertragungstechnik basierende Kommunikationsschnittstelle zum Empfangen und/ oder Senden von Daten über einen zweiten Kommunikationskanal umfasst. Bei dem erfindungsgemäßen Verfahren kommuniziert ein in der Vorrichtung gespeichertes Anwendungsprogramm über eine erste Software-Schnittstelle mit der ersten Kommunikationsschnittstelle. Eine Kommunikation von der ersten Software-Schnittstelle zu der ersten Kommunikationsschnittstelle, und umgekehrt, wird über eine zweite Software-Schnittstelle geleitet, wobei das Anwendungsprogramm mit der zweiten Kommunikationsschnittstelle über die zweite Software-Schnittstelle kommuniziert.

Das erfindungsgemäß vorgeschlagene Verfahren weist dabei die gleichen Vorteile auf, wie diese in Verbindung mit der erfindungsgemäßen Vorrichtung erläutert wurden.

Der Umfang der Erfindung wird durch den unabhängigen Verfahrensanspruch 1 definiert. Weitere vorteilhafte Aspekte werden in den abhängigen Ansprüchen 2-5 beschrieben.

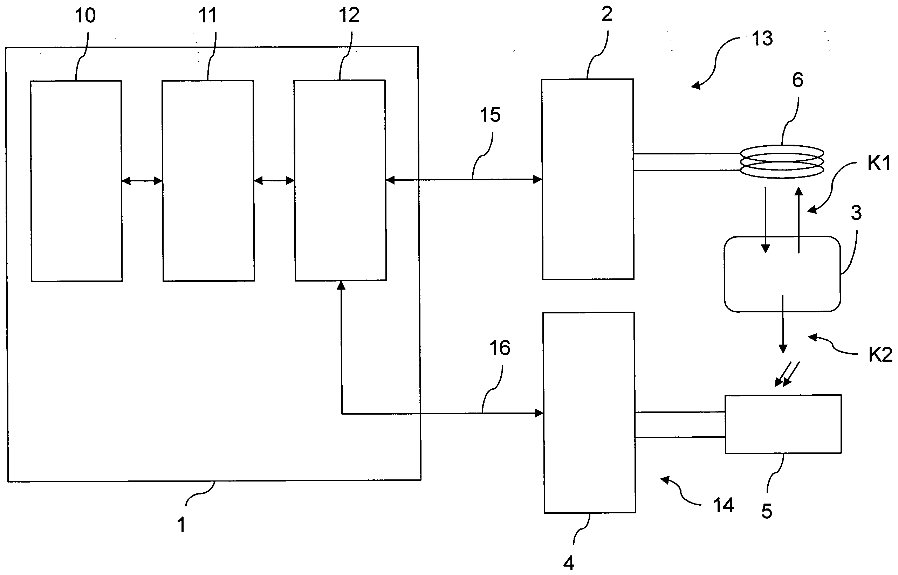

Die Erfindung wird nachfolgend näher anhand eines Ausführungsbeispiels in der Zeichnung erläutert. Die einzige Figur zeigt in einer schematischen Darstellung eine erfindungsgemäße Vorrichtung zur Kommunikation mit einem tragbaren Datenträger.

Die erfindungsgemäße Vorrichtung umfasst eine Recheneinheit 1, beispielsweise einen Rechner, Laptop oder ein Terminal, an das zur Ausbildung einer ersten Kommunikationsschnittstelle 13 ein RFID-Lesegerät 2 mit einer Antennenspule 6 zur Erzeugung eines magnetischen Wechselfelds zur Kommunikation über einen ersten Kommunikationskanal K1 mit einem tragbaren Datenträger 3 angeschlossen ist. Das Lesegerät 2 kann beispielsweise zur Kommunikation mit kontaktlosen Chipkarten nach dem Standard ISO/IEC 14443 ausgebildet sein. Ferner ist zur Ausbildung einer zweiten Kommunikationsschnittstelle 14 ein zweites Lesegerät 4 vorgesehen, welches beispielsweise zum Empfang und/ oder Aussenden von Infrarotsignalen ausgebildet ist. Eine diesbezügliche Sende-/Empfangseinheit, beispielsweise ein IRDA-Empfänger, ist mit dem Bezugszeichen 5 gekennzeichnet, der mit dem zweiten Lesegerät 4 über entsprechende Leitungen zum Datenaustausch gekoppelt ist. Das RFID-Lesegerät 2 sowie das weitere Lesegerät 4 können über eine jeweilige kabelgebundene Verbindung 15,16 mit der Recheneinheit 1 der erfindungsgemäßen Vorrichtung zum Austausch von Daten verbunden sein. Beispielsweise kann ein Anschluss der jeweiligen Lesegeräte 2, 4 über eine USB-Schnittstelle oder auch eine andere Schnittstelle erfolgen.

Ein zweiter, zusätzlicher Kommunikationskanal K2 wird zwischen einer nicht näher dargestellten optischen Schnittstelle des Datenträgers 3 und dem Empfänger 5 des zweiten Lesegeräts 4 ausgebildet. Während die Kommunikationsverbindung K1 in herkömmlicher Weise sowohl die Übertragung von Daten als auch die Übertragung von Energie ermöglicht, können über den zweiten Kommunikationskanal K2 lediglich Daten ausgetauscht werden. Die Energieversorgung der Sende-/Empfangseinheit des tragbaren Datenträgers 3 sowie dessen optischer Schnittstelle erfolgt beispielsweise über die, aus dem magnetischen Wechselfeld der Antennenspule 6 entnommene Energie.

Bei dem tragbaren Datenträger 3 kann es sich beispielsweise um eine Chipkarte, eine Smartcard usw. handeln, welche korrespondierend zu den Schnittstellen der erfindungsgemäßen Vorrichtung ausgebildete Schnittstellen zur Kommunikation mit dem RFID-Lesegerät 2 und zur Kommunikation mit der optischen Sende-/Empfangseinheit 5 des zweiten Lesegeräts 4 aufweist.

Die Recheneinheit ist stark vereinfacht dargestellt. Es sind lediglich die für die Erfindung relevanten Komponenten dargestellt. Die Recheneinheit verfügt über ein Anwendungsprogramm (Application Software) 10, eine erste Software-Schnittstelle 11 zu dem RFID-Lesegerät 2 sowie eine zweite Software-Schnittstelle 12 zu dem weiteren, zweiten Lesegerät 4. Bei der ersten Software-Schnittstelle 11 handelt es sich beispielsweise um ein PC/SC-Interface (d.h. eine Schnittstelle zwischen einem Rechner und einer Smartcard). Es können jedoch auch andere, standardisierte Interfaces, beispielsweise gemäß TCP/IP oder RS232, zum Einsatz kommen.

Weitere Komponenten der Recheneinheit 1, wie beispielsweise ein Betriebssystem oder eine Bedienerschnittstelle, werden, da sie für die Erfindung nicht von Bedeutung sind, nicht dargestellt.

In einer dem Fachmann bekannten Weise sendet das Anwendungsprogramm 10 Applikationsdaten und Steuersequenzen an die erste Software-Schnittstelle 11 oder das Anwendungsprogramm 10 erhält Applikationsdaten und Statusmeldungen von der ersten Software-Schnittstelle 11 zurück. Die Aufgabe der ersten Software-Schnittstelle 11 besteht darin, die empfangenen Steuersequenzen und Applikationsdaten in komplexe Kommandos zu übersetzen, welche dann von der ersten Software-Schnittstelle 11 an das RFID-Lesegerät 2 gesendet werden. Dabei können durch die erste Software-Schnittstelle auch vollständige Sequenzen verarbeitet werden, wie beispielsweise die Reihenfolge REQUEST→ANTICOLLISION→SELECT, wie zum Aufbau einer Kommunikationsbeziehung zwischen einer Vorrichtung zu einem tragbaren Datenträger.

Der Vorrichtung 1 soll nun die Möglichkeit eröffnet werden, durch die Verwendung des zusätzlichen Kommunikationskanals K2 zwischen dem tragbaren Datenträger 3 und dem Anwendungsprogramm 10 die Sicherheit der kontaktlosen Kommunikation zwischen dem Datenträger 3 und der Vorrichtung 1 zu erhöhen. So ist es z.B. nicht möglich, einen kontaktlosen Datenträger 3 unbemerkt oder ungewollt auszulesen, wenn dieser über den zusätzlichen Kommunikationskanal K2 gesichert ist. Die Sicherheit ist insbesondere dadurch erhöht, dass die beiden Kommunikationskanäle K1, K2 auf unterschiedlichen Übertragungsprinzipien basieren. Beispielsweise ist es bekannt, eine durch ein Kommando ("Get Challenge") von der Vorrichtung bzw. dem Anwendungsprogramm 10 angeforderte Zufallszahl über den zusätzlichen Kommunikationskanal K2 zu senden, während auf dem ersten Kommunikationskanal K1 (d.h. dem kontaktlosen Interface) keine oder ungültige Daten übertragen werden. Die über den zweiten Kommunikationskanal K2 (d.h. dem optischen Kanal) gesendeten Daten werden an der zweiten Kommunikationsschnittstelle 14, d.h. der Sende-/Empfangseinheit 5 empfangen.

Um dem Anwendungsprogramm 10 die auf der zweiten Kommunikationsschnittstelle 14 empfangenen Daten zur Verfügung zu stellen, wird die bereits erwähnte zweite Software-Schnittstelle 12 verwendet. Insbesondere ist hierbei vorgesehen, dass die gesamte Kommunikation zwischen der ersten Software-Schnittstelle 11 und dem RFID-Lesegerät 2 vollständig über die zusätzliche, zweite Software-Schnittstelle 12 geleitet wird.

Die zweite Software-Schnittstelle analysiert und interpretiert den Datenstrom zwischen der ersten Software-Schnittstelle 11 und dem RFID-Lesegerät 2. Wird von der ersten Software-Schnittstelle 11 beispielsweise ein Kommando gesendet, auf welches eine Antwort über die erste Kommunikationsschnittstelle 13 (d.h. über das RFID-Lesegerät 2) erwartet wird, so ist vorgesehen, dass anstelle der Antwort des RFID-Lesegeräts 2, die über die zweite Kommunikationsschnittstelle 14 (d.h. das weitere Lesegerät 4) empfangenen Daten an das Anwendungsprogramm 10 geleitet werden. Die von dem RFID-Lesegerät 2 empfangenen Anwendungsdaten können hingegen verworfen werden, da diese keine gültigen Daten enthalten.

Es kann weiterhin vorgesehen sein, dass die zweite Software-Schnittstelle 14 Kommandos, die von der ersten Software-Schnittstelle 11 an das RFID-Lesegerät 2 gesendet werden, so angepasst oder verändert werden, dass damit eine Kommunikation über den zweiten Kommunikationskanal K2 aktiviert werden kann.

## Patentansprüche

1. Verfahren zur Kommunikation zwischen einer Vorrichtung und einem tragbaren Datenträger (3), wobei die Vorrichtung eine erste, auf drahtloser Datenübertragungstechnik basierende Kommunikationsschnittstelle (13) zum Empfangen und/oder Senden von Daten des Datenträgers über einen ersten Kommunikationskanal und eine zweite, auf dazu unterschiedlicher kontaktloser Datenübertragungstechnik basierende Kommunikationsschnittstelle (14) zum Empfangen und/oder Senden von Daten des Datenträgers über einen zweiten Kommunikationskanal umfasst, bei dem
- ein in der Vorrichtung gespeichertes Anwendungsprogramm (10) über eine erste Software-Schnittstelle (11) mit der ersten Kommunikationsschnittstelle (13) kommuniziert,
- eine Kommunikation von der ersten Software-Schnittstelle (11) zu der ersten Kommunikationsschnittstelle (13), und umgekehrt, über eine zweite Software-Schnittstelle geleitet wird, wobei das Anwendungsprogramm (10) mit der zweiten Kommunikationsschnittstelle (13) über die die zweite Software-Schnittstelle (12) kommuniziert,
**gekennzeichnet dadurch, dass**
- die zweite Software-Schnittstelle (12) die zwischen der ersten Software-Schnittstelle (11) und der ersten Kommunikationsschnittstelle (13) übertragenen Daten analysiert und interpretiert, derart, dass die zweite Software-Schnittstelle (12) in Abhängigkeit des Ergebnisses einer Analyse der von der ersten Kommunikationsschnittstelle (13) übertragenen Daten selektiv die an der ersten oder an der zweiten Kommunikationsschnittstelle (13,14) empfangenen Daten verarbeitet und an das Anwendungsprogramm (10) überträgt.

2. Verfahren nach Anspruch 1, bei dem die gesamte Kommunikation von der ersten Software-Schnittstelle (11) zu der ersten Kommunikationsschnittstelle (13) über die zweite Software-Schnittstelle geleitet wird.

3. Verfahren nach Anspruch 1 oder 2, bei dem an der zweiten Kommunikationsschnittstelle (13) empfangene Daten über die zweite Software-Schnittstelle (12) an das Anwendungsprogramm (10) übertragen werden.

4. Verfahren nach einem der Ansprüche 1 bis 3, bei dem die erste Software-Schnittstelle (11) von dem Anwendungsprogramm (10) erhaltene Daten, insbesondere Applikationsdaten und/ oder Steuersequenzen, in Kommandos der ersten Kommunikationsschnittstelle (13) übersetzt, und umgekehrt.

5. Verfahren nach einem der Ansprüche 1 bis 4, bei dem die zweite Software-Schnittstelle (12) von der ersten Software-Schnittstelle (11) empfangene Daten, insbesondere Kommandos für die erste Kommunikationsschnittstelle (13), anpasst und/ oder verändert, um eine Kommunikation über die zweite Kommunikationsschnittstelle (14) zu aktivieren.

## Claims

1. A method for communicating between an apparatus and a portable data carrier (3), wherein the apparatus comprises a first communication interface (13), based on wireless data transfer technology, for receiving and/or transmitting data of the data carrier via a first communication channel, and a second communication interface (14), based on different contactless data transfer technology, for receiving and/or transmitting data of the data carrier via a second communication channel, wherein
- an application program (10) stored in the apparatus communicates with the first communication interface (13) via a first software interface (11),
- a communication from the first software interface (11) to the first communication interface (13), and vice versa, is passed via a second software interface, the application program (10) communicating with the second communication interface (13) via the second software interface (12), **characterized in that**
- the second software interface (12) analyzes and interprets the data transferred between the first software interface (11) and the first communication interface (13), in such a way that the second software interface (12) processes the data received at the first or at the second communication interface (13, 14), and transfers them to the application program (10), selectively in dependence on the result of an analysis of the data transferred from the first communication interface (13).

2. The method according to claim 1, wherein the total communication from the first software interface (11) to the first communication interface (13) is passed via the second software interface.

3. The method according to claim 1 or 2, wherein data received at the second communication interface (13) are transferred to the application program (10) via the second software interface (12).

4. The method according to any of claims 1 to 3, wherein the first software interface (11) translates data obtained from the application program (10), in particular application data and/or control sequences, into commands of the first communication interface (13), and vice versa.

5. The method according to any of claims 1 to 4, wherein the second software interface (12) adjusts and/or changes data received from the first software interface (11), in particular commands for the first communication interface (13), in order to activate a communication via the second communication interface (14).

## Revendications

1. Procédé de communication entre un dispositif et un support de données portable (3), le dispositif comprenant une première interface de communication (13) qui est basée sur une technique de transmission de données sans fil et est destinée à la réception et/ou à l'envoi de données du support de données par l'intermédiaire d'un premier canal de communication, et une deuxième interface de communication (14) qui est basée sur une technique de transmission de données sans fil différente de cela et est destinée à la réception et/ou à l'envoi de données du support de données par l'intermédiaire d'un deuxième canal de communication, dans lequel
- un programme d'application (10) mémorisé dans le dispositif communique, par l'intermédiaire d'une première interface logicielle (11), avec la première interface de communication (13),
- une communication de la première interface logicielle (11) vers la première interface de communication (13), et inversement, est guidée par le biais d'une deuxième interface logicielle, le programme d'application (10) communiquant avec la deuxième interface de communication (13) par le biais de la deuxième interface logicielle (12),
**caractérisé en ce que**
- la deuxième interface logicielle (12) analyse et interprète les données transmises entre la première interface logicielle (11) et la première interface de communication (13), de telle façon que la deuxième interface logicielle (12), en fonction du résultat d'une analyse des données transmises par la première interface de communication (13), traite sélectivement les données reçues à la première ou à la deuxième interface de communication (13, 14) et les transmet au programme d'application (10).

2. Procédé selon la revendication 1, dans lequel l'ensemble de la communication est guidée de la première interface logicielle (11) à la première interface de communication (13) par le biais de la deuxième interface logicielle.

3. Procédé selon la revendication 1 ou 2, dans lequel des données reçues à la deuxième interface de communication (13) sont transmises par le biais de la deuxième interface logicielle (12) au programme d'application (10).

4. Procédé selon une des revendications de 1 à 3, dans lequel la première interface logicielle (11) traduit en ordres de la la première interface de communication (13), et inversement, des données reçues par le programme d'application (10), en particulier des données d'application et/ou des séquences de commande.

5. Procédé selon une des revendications de 1 à 4, dans lequel la deuxième interface logicielle (12) adapte et/ou modifie des données reçues par la première interface logicielle (11), en particulier des ordres pour la première interface de communication (13), afin d'activer une communication par le biais de la deuxième interface de communication (14).
